# EUROPEAN PATENT SPECIFICATION

(11) **EP 2 050 695 B1**
(45) Date of publication and mention of the grant of the patent: **18.09.2013**
(21) Application number: 08075818.8
(22) Date of filing: 13.10.2008
(51) Int. Cl.: B65G 1/137

(54) **Station for collecting products in collecting containers from product containers**
Station zum Sammeln von Produkten in Sammelbehältern aus Produktbehältern
Station de collecte de produits dans des conteneurs de collecte à partir de conteneurs de produits

(30) Priority: 17.10.2007 NL 1034535
(43) Date of publication of application: 22.04.2009
(73) Proprietor: Vanderlande Industries B.V., 5466 RB Veghel (NL)
(72) Inventor: Dackus, Piotr Stefan, 4921 BP Made (NL); Hendriks, Petrus Joannes Christiaan, 5473 SM Heeswijk-Dinther (NL); Ten Hoor, Martin Cornelis, 5223 XZ 'S-Hertogenbosch (NL); Pennings, Marco Johannes Marinus, 5491 Sint-Oedenrode (NL); Van Wijngaarden, Bruno, 5691 RE Son (NL)
(74) Representative: Dorna, Peter

(56) References cited:
- EP-A- 1 443 002
- EP-A- 1 452 462
- EP-B- 1 641 687
- WO-A-2006/042347
- DE-A1- 10 340 143
- DE-U1- 20 112 328

## Description

The present invention relates to a station for collecting products from product containers according to the preamble of claim 1.

European patent EP-B1-1 641 487 describes a station at which a row of collecting containers is present. Behind said row, parallel thereto, extends a conveyor for supplying empty collecting containers to the row and discharging filled collecting containers from said row. Disposed above said conveyor, at a level higher than that of the collecting containers in the row, is a further conveyor having a tilted orientation, which conveys product containers with their open upper sides slightly tilted in the direction of the row of collecting containers towards a pick position. From a product container present at the pick position, products are placed into one collecting container or a number of collecting containers by a picker present at the front side of the row of collecting containers. Signals from light screens provided above the open upper sides of the product containers are used for controlling said further conveyor to convey a next product container to the pick position.

European patent application EP-A1-1 443 002 describes a station according to the preamble of claim 1 with a zone-picking installation comprising a rack with pick positions for product containers located beside and above one another. Within said rack positions, space is reserved for place positions as well as for the supply and discharge of collecting containers to and from said place position via a conveying path. By way of alternative embodiment it is suggested therein to make use of a paternoster conveying system, in which the vertical paternoster plane extends perpendicularly to the longitudinal direction of the rack and the collecting container is moved rearwards over a distance equal to the width of the collecting container after having reached the place position and being filled, whereupon the collecting container is carried off in a vertically downward direction.

The object of the present invention is to provide a station which makes it possible to replace product containers as quickly as possible after all the products needed have been removed from the product container for being collected in one or a number of collecting containers. A precondition in that case is that the working conditions for the picker be ergonomically advantageous, so that the risk of labour lost due to illness of the picker is reduced and the capacity of the station is increased. In order to accomplish that object, the station according to the invention comprises the features of claim 1. The use of separate drive means has the advantage that the supply of a product container to the pick position and the discharge of a product container from said pick position can take place at flexibly as possible, so that the exchanging of a product container present at the pick position take place as quickly as possible. More specifically, this means that the transport of a product container and of a next product container need not take place synchronously. Because separate drive means are used, the conveying system can comprise separate conveyors for conveying product containers to the pick position via the first conveying path portion and from said pick position via the second conveying path portion. Another important advantage obtained by using the invention is that the physical load for the picker is significantly reduced because the products are removed from the product container at the same level as that at which the products must subsequently be placed in the collecting containers. More specifically, what is achieved by using the station according to the invention is that the picker need not raise his/her elbow above his/her shoulder while picking, which has been found to be a very important advantage for ergonomic reasons.

The required human interference in operating the station according to the invention is reduced since the conveying system according to the invention comprises a number of second conveyors, each for conveying a collecting container to be filled with at least one product from a product container present at the pick position towards a place position and for conveying a collecting container filled with at least one product from a product container present at the pick position in a direction away from the place position, which not only increases the capacity of the device but which, in addition, is also advantageous from the viewpoint of working conditions.

When a second conveying path portion extending in horizontal direction, preferably perpendicular to the row, is used, in particular in combination with a first conveying path portion that extends downwards from the pick position, it is preferable if a further conveying path portion connects to the second conveying path portion at the end of said second conveying path portion remote from the pick position, which further conveying path portion is oriented downwards, so that the supply of product containers to the first conveying path portion and the discharge of product containers from said further conveying path portion can take place at at least substantially the same level, viz. lower than the level of the row of place positions.

To increase the level of flexibility in supplying and discharging product containers to and from the pick position, it is furthermore preferable if the conveying system comprises separate drive means for driving the conveying system at the location of said second conveying path portion and said further conveying path portion.

It is preferable for ergonomic reasons if the place positions associated with the station are provided in only one layer. In this way a picker need not raise his/her elbow above shoulder level while collecting products from a product container present at the pick position in a collecting container present at one of the place positions.

The amount of space taken up by the station can advantageously be reduced if the conveying path comprises at least one horizontal conveying path portion extending at least substantially parallel to the row below the level of said row, in particular if the conveying path portion extends at least partially directly below at least part of the place positions associated with the row and/or if a horizontal conveying path portion extending at least substantially parallel to said row is provided below the level of the row both upstream of the pick position and downstream of the pick position.

According to a very advantageous preferred embodiment, the conveying path portions in question extend in parallel directions, i.e. not in line with each other. Thus, the supply of containers to an upwardly oriented first conveying path portion according to a previously discussed preferred embodiment and the discharge of containers from a downward oriented further conveying path portion connecting to a horizontal second conveying path portion can take place independently of each other.

According to the invention, in order to further improve the capacity and the ergonomic properties of the known device, it is preferable if the row of place positions comprises only one pick position. By limiting the number of pick positions within the row to one, the remaining space in the row is available for the place positions, so that maximum amount of collecting containers can be presented to the picker within the length of the row.

Quite preferably, a place position is provided on two opposite sides of the pick position, adjacent thereto. Thus, at least one place position is present both to the left and to the right of the pick position, so that the picker only needs to bridge a minimum distance between the product container and the collecting containers in question.

Furthermore preferably, the first conveying path portion extends downwards from the pick position in that case. This implies that the product containers are supplied in upward direction to the pick position, so that in any case the advantage is achieved that the space for a picker's head can remain clear, which makes the working environment for the picker more pleasant, whilst in addition the picker can already see products in the product container while the product container is moving upwards towards the pick position, which will make it easier to take products out of the product container.

Especially in combination with the preceding preferred embodiment, it is furthermore preferable if the first conveying path portion extends at an angle to the vertical, so that space can be cleared for a picker's feet, so that the picker can position himself as close to the product container as possible at the pick position, which is advantageous from the viewpoint of working conditions.

The angle in question is preferably maximally 30 degrees, so that the first conveying path portion can remain spatially compact.

The second conveying path portion preferably extends in horizontal direction, in particular perpendicularly to the row. In the latter case, the second conveying path portion will not take up any space that is now available within the row for place positions or possibly another pick position.

The conveying path preferably extends at least partially under at least part of the second conveyors, so that the available space is utilised in an efficient manner.

To supply and discharge collecting containers to and from the second conveyors, the conveying system preferably comprises a third conveyor connecting to the second conveyors at the end remote from the place position associated with the second conveyor in question for transferring collecting containers between second conveyors and said third conveyor.

The third conveyor preferably extends at least partially parallel to the row, so that the second conveyors can have at least substantially the same length.

With a view to controlling the station, it is preferable if sensor means are provided at each place position for detecting movement in a collecting container at the location of the place position in question. Such a movement may be the movement of a product being placed in the collecting container in question or possibly the movement of the picker's hand used in placing the product in question into the collecting container.

Very suitable sensor means are obtained if the sensor means comprise a light screen, which is preferably horizontally oriented, thus being capable of covering the open upper side of a collecting container.

The control of the station according to the invention can in particular take place in a very efficient manner if the control means are designed to receive information about the number of products that is to be collected from a product container present at the pick position in one or a number of collecting containers present at one or a number of place positions for the purpose of counting the number of movements in the collecting container(s) in question on the basis of signals from the sensor means after the product container in question has reached the pick position and controlling the first conveyor to convey a next product container to the pick position as soon as the number of movements counted corresponds to the number of products to be collected from a product container present at the pick position in one or a number of containers present at one or a number of place positions. In this way the total number of movements at collecting containers in which products are to be collected from a product container present at the pick position is used as a control signal for exchanging the product container in question for a next product container.

The invention will now be explained in more detail by means of a description of a number of preferred embodiments of the invention, in which reference is made to the following figures:
Figures 1 and 2 show an embodiment of a station, viewed from different angles, having a transfer conveyor not forming part of a station according to the present invention;
Figures 3 and 4 are a perspective view and a side view, respectively, of the transfer conveyor forming part of the station as shown in figures 1 and 2 in two different operating positions thereof;
Figure 5 is a perspective view of a part of a first preferred embodiment of a station according to the invention, showing in the boxed part thereof a detail of a transfer conveyor that forms part of the station according to the invention, in question;
Figure 6 is a perspective view of the transfer conveyor that forms part of the station shown in figure 5;
Figures 7a-7f show six successive positions during operation of the transfer conveyor shown in figure 6;
Figure 8 shows a transfer conveyor that forms part of a second preferred embodiment of the station (not shown) according to the invention;
Figures 9a and 9b show two different positions of carrier means that may form part of a transfer conveyor forming part of a third preferred embodiment of the station according to the invention.

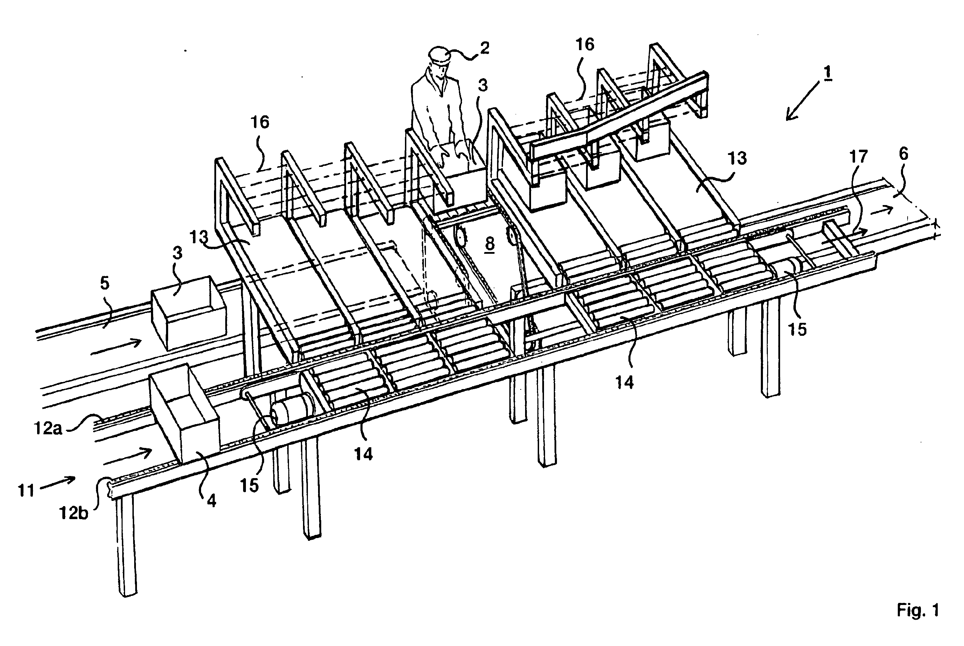

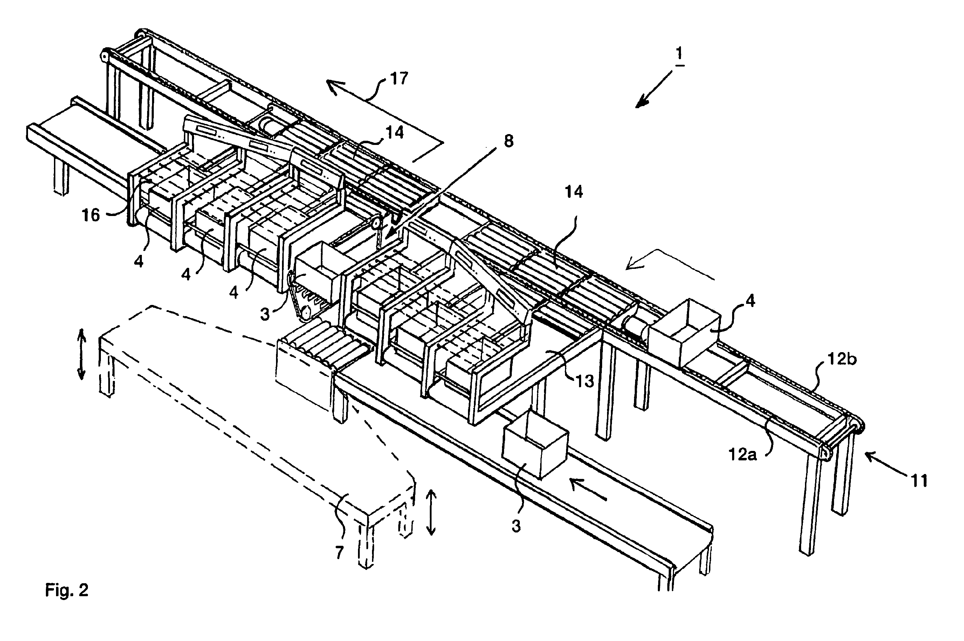

Figures 1 and 2 show a station 1 where a picker 2 standing on a platform 7 is carrying out work. For ergonomic reasons, the platform 7 may be adjustable for height (see the arrows in figure 2). Said work consists of collecting products from a product container 3 in the form of a crate in one collecting container, or a number of collecting containers (likewise in the form of a crate), in accordance with orders given to the picker 2, for example via a display screen or by means of light signals (according to the "pick to light" principle).

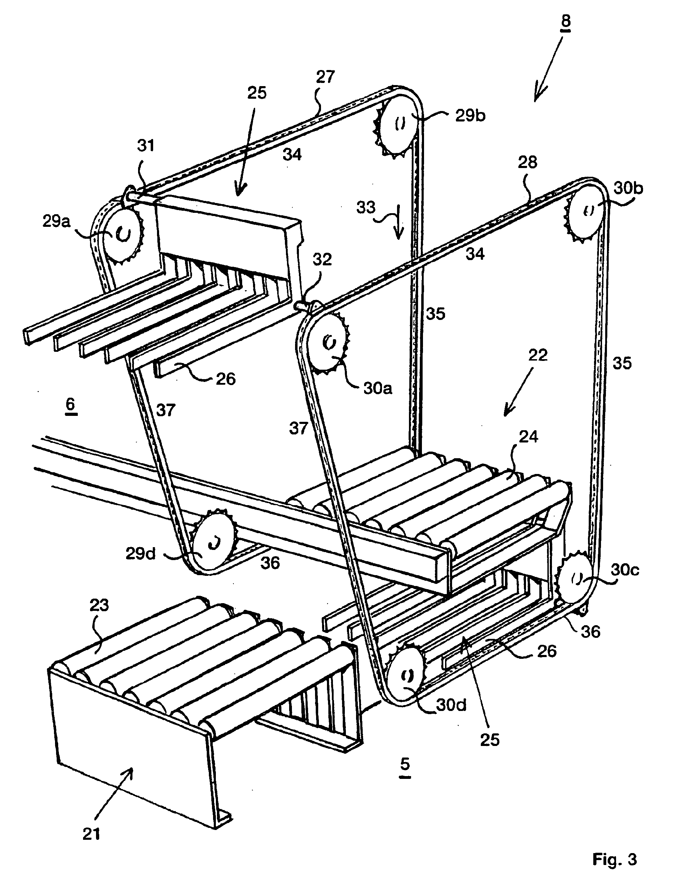

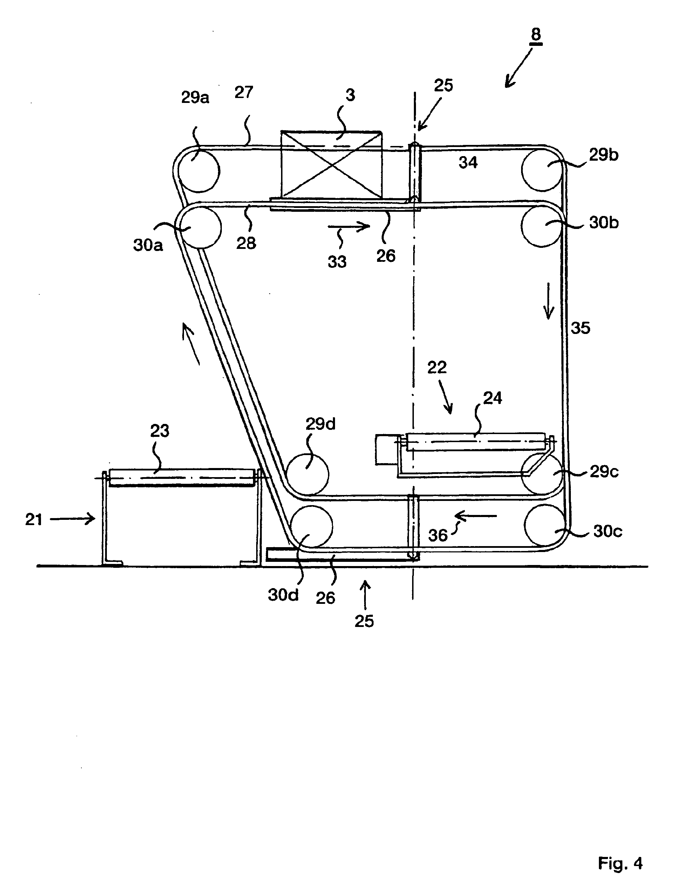

The station 1 comprises a conveying system for conveying product containers 3 along a conveying path of which a so-called pick position forms part. In figure 1, said pick position is the position of the product container 3 from which the picker 2 is just removing something. The conveying system for product containers 3 comprises a supply conveyor 5 disposed upstream of the pick position and a discharge conveyor 6 disposed downstream of the pick position. The supply conveyor 5 and the discharge conveyor 6, or at least the extensions thereof, extend parallel to each other at a level approximately the same as the level of the platform 7. Between the supply conveyor 5 and the discharge conveyor 6, the conveying system for product containers 3 comprises a transfer conveyor 8, which will be described in more detail yet with reference to figures 3 and 4. The transfer conveyor 8 connects to a downstream end of the supply conveyor 5 on the one hand and to an upstream end of the discharge conveyor 6 on the other hand. The transfer conveyor 8 conveys product containers 3 along a portion of the conveying path associated with the conveying system for product containers 3, of which portion the pick position forms part.

Likewise, a conveying system is provided for the collecting containers 4. Said conveying system comprises a main conveyor 11 of the double belt type comprising two spaced-apart conveyor belts 12a, 12b. At two opposite sides of the transfer conveyor 8, three subconveyors 13 (six in all) connect to the main conveyor 11 at right angles. The collecting containers 4 can be transferred from the main conveyor 11 to each of the subconveyors 13 by means of vertically adjustable roller assemblies 14, which are provided between the belts 12a, 12b for each subconveyor 13 and which, in a high position thereof, can take over collecting containers 4 from the conveyor belts 12a, 12b, whilst collecting containers 14 can be transferred to a desired subconveyor 13 by suitable driving the rollers associated with the roller assemblies 14 by means of an associated electric motor 15. Conversely, the collecting containers 4 can in turn be taken over from one of the subconveyors 13 by the main conveyor 11, in which case the rollers of the roller assemblies 14 are driven in the opposite direction.

The ends of the subconveyors 13 remote from the main conveyor 11 each form a so-called place position for a collecting container 14, as is shown in figure 1 for the three subconveyors 13 on the left-hand side of the picker 2 (on the right in figure 1) and for all six subconveyors 13 in figure 2. The place positions of the six (in all) subconveyors 13 form a horizontal row which slightly curves round the picker 2, to which end the subconveyors 13 have a slightly increasing length, seen in a direction away from the picker position. In the centre of said row, the pick position forms part of said row.

Disposed above the open upper sides of the collecting containers 4 present at a place position are light screens 16, one for each place position, by means of which movements of the picker's hand/arm or of a product to be collected in the collecting container 4 in question can be detected through the light screen 16 in question. Once a product container 3 has arrived at the pick position and the number of movements detected at place positions by the associated light screen 16 corresponds to the number of products to be collected in one or a number of collecting containers 4 present at a place position, a control system (not shown) delivers the control signal to control the conveying system for the product containers 3, in particular the transfer conveyor 8 thereof, to supply a next product container to the picker 2 present at the pick position. At the same time a previously supplied product container used by the picker 2 is discharged from the pick position to a location elsewhere by the conveying system so as to make it possible to supply a next product container 3 to the pick position that has thus been cleared. In addition to that, the picker 2 can manually overrule the control system - depending on the operating conditions - and discharge a used product container 3 from the pick position to a location elsewhere by means of the conveying system by operating a manual control device (not shown), such as a control button.

The same control system can also arrange for the collecting containers 4 to be discharged again once all the products have been collected therein in accordance with a collecting order, which can be done by driving the subconveyor 13 in question in the direction of the main conveyor 11 and subsequently taking over the collecting container 4 in question by suitable actuation of the associated roller assembly 14 by the main conveyor 11, after which the collecting container 4 in question can be further discharged in the direction indicated by the arrow 17 and a next collecting container 4 yet to be filled can be supplied from the main conveyor 11 to the place position thus cleared. The initiation of such an exchange of collecting containers 4 can also take place on the basis of a signal delivered by the picker 2, for example in that the picker operates a button at the place position in question once he/she has concluded that all the desired products have been collected in the collecting container 4 in question.

It is noted that it is preferable not to discharge a product container 3 and/or a collecting container 4 from the device if no movements have been detected or registered yet in the light screens 16 associated with the place positions. In this way errors during the pick and place process are prevented.

The supply conveyor 5 extends under the subconveyor 13, on the right-hand side of the picker 2 in figure 1, more specifically roughly under the associated place positions thereof, whilst the discharge conveyor 6 extends under the subconveyors 13 on the right-hand side of the picker 2 in figure 1.

Figures 3 and 4 show the transfer conveyor 8 in more detail in two operating positions thereof. The transfer conveyor 8 is of the paternoster type, in which the associated circulating movement takes place in the vertical plane perpendicular to the row of place positions. The transfer conveyor 8 comprises two short roller conveyor portions 21, 22 with respective slightly spaced-apart rollers 23, 24. The roller conveyor portion 21 connects to the downstream end of the supply conveyor 5 and can thus take over product containers 3 from the supply conveyor 5. The roller conveyor portion 22 connects to the upstream end of the discharge conveyor 6 and can thus transfer product containers 3 to the discharge conveyor 6 by suitably driving the roller conveyor portion 22 or by suitably driving pusher means (not shown). The roller conveyor portions 21, 22 are disposed at more or less the same vertical level, with the individual rollers 23, 24 associated with the respective roller conveyor portions 21, 22 being in line with each other.

The transfer conveyor 8 further comprises two fork means 25 provided with horizontal teeth 26 suitable for supporting a product container 3, which teeth are spaced apart by a distance equal to the spacing between the rollers 23 or the rollers 24 (see figure 4). Each of the fork means 25 is connected to two endless conveyor belts 27, 28 which are passed over toothed pulleys 29a-29d and 30a-30d. The connection 31, 32 between the conveyor belts 27, 28 on the one hand and the fork means 25 on the other hand is such that the orientation of the fork means 25 remains unchanged while the conveyor belts 27, 28 are being driven, to which end guide means (not shown) for the fork means 25 are furthermore provided.

When the conveyor belts 27, 28 are driven in the direction indicated by the arrows 33, the fork means 25 follow an endless path in the vertical plane perpendicular to the row of place positions. Four path portions can be distinguished, viz. a path portion 34 which extends horizontally rearwards from the pulleys 29a, 30a, seen from the picker 2; a path portion 35 which extends vertically downwards from the pulleys 29c, 30c; a path portion 36 which extends horizontally towards the picker 2; and a path portion 37 which extends upwards between the pulleys 29d, 30d and 29a, 30a, which has an inclined orientation on account of the fact that the pulleys 29d, 30d and 29a, 30a are not disposed directly above each other. Thus, space is provided for the picker's feet near the roller conveyor portion 21, so that the picker 2 is positioned relatively close to a product container 3 at the location of the pick position.

Starting from the situation in which a product container 3 has been taken over from the supply conveyor 5 by the roller conveyor portion 21, the fork means 25 shown on the bottom side in figure 3 will pick up the product container 3 in question when the conveyor belts 27, 28 are driven in the direction indicated by the arrows 33, because the teeth 26 of the fork means 25 in question can move between the rollers 23 and pick up the product container 3 in question. Subsequently, the transfer conveyor 8 initially transports the product container 3 obliquely upwards along the path portion 37 to the pick position, where the conveying movement is temporarily stopped and the picker 2 will carry out the required collecting activities in accordance with the aforesaid instructions, removing one or a number of products from the product container 3 and placing said product(s) in one or a number of collecting containers 4 present at place positions.

Once all the products to be collected have been removed from the product container 3 and it has been detected by means of the light screens 16 that said products have also been placed in the correct collecting container 4, and that in the correct numbers, the control system will deliver a control signal to the transfer conveyor 8, thereby setting the conveyor belts 27, 28 in motion again as indicated by the arrows 33 and moving the fork means 25 in question horizontally rearwards along the conveying path 34 and subsequently vertically downwards along the conveying path 35. In the last part of the conveying path 35, the teeth 26 will move between the rollers 24 of the roller conveyor portions 22, so that the product container 3 is taken over by the roller conveyor portion 22. By driving one or a number of rollers 24 of the roller conveyor portion 22 in the direction of the discharge containers 6 shortly after said transfer of the product container 3 to the roller conveyor portion 22, the product container 3 is in turn transferred to the discharge conveyor 6, thereby clearing the roller conveyor portion 22 for a next product container 3.

While the aforesaid fork means 25 is being transported along the path portions 34 and 35, the other fork means 25 will pick up a next product container 3 that has arrived on the roller conveyor portion 21 from the supply conveyor 5 and transport it to the pick position. It is advantageous in that regard if the transfer of the other product container 3 to the roller conveyor portion 22 has already taken place before said next product container 3 arrives at the pick position, so that further transport of said other product container 3 can take place via the discharge conveyor 6.

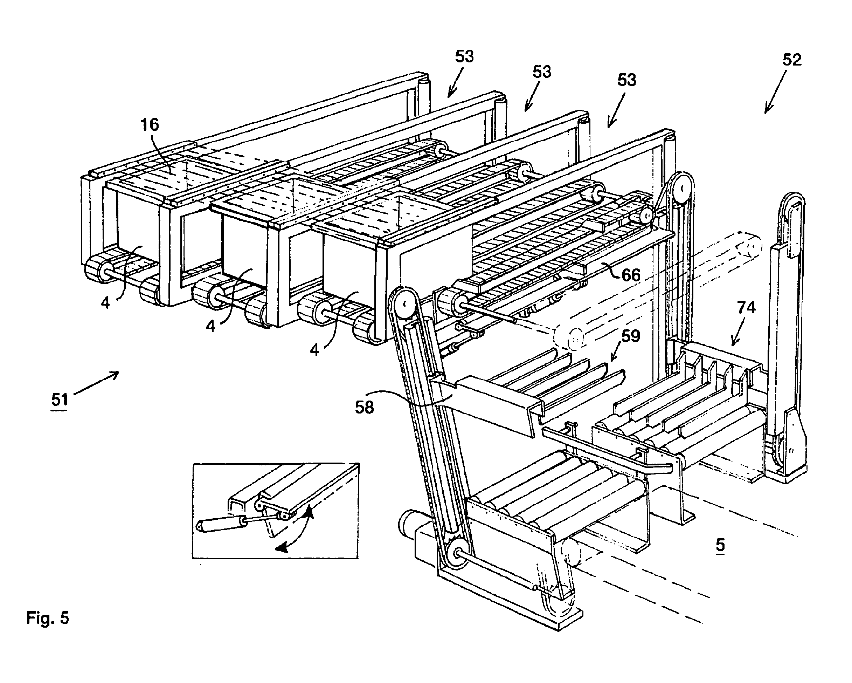

Figures 5-7f relate to a first preferred embodiment of a station 51 according to the invention, which is partially shown in the figures. The routing both of the product containers 3 and of the collecting containers 4 is the same as the routing thereof described with regard to station 1. Station 51 is different from the station 1 in particular as regards the transfer conveyor 52 used with the station 51. Furthermore, the six subconveyors 53, three of which are shown in figure 5, are configured as double belt conveyors. The collecting containers 4 are at the place positions in figure 5, and light screens 16 are positioned above the open upper sides of the collecting containers 4.

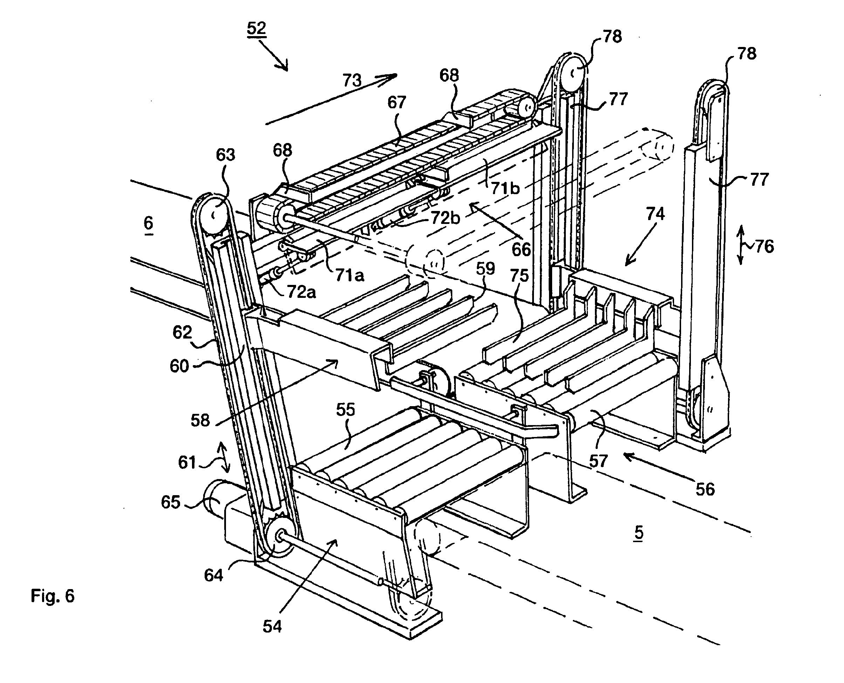

The transfer conveyor 52 comprises a roller conveyor portion 54 provided with parallel rollers 55, which connects to the downstream end of the supply conveyor 5, and a roller conveyor portion 56 provided with rollers 57, which connects to the upstream end of the discharge conveyor 6. To transport a product container 3 to the pick position from the roller conveyor portion 54, the transfer conveyor 52 comprises fork means 58 provided with parallel teeth 59, which, seen in top plan view, are positioned between the rollers 55 of the roller conveyor portion 54. The fork means 58 extends in two guides on two opposite sides, only one of which guides, viz the guide 60, is shown in figures 5 and 6. The guides 60 slope upwards, being inclined toward the position of the picker 2 present on the platform 7. The fork means 58 can move forward and backward, as indicated by the double arrow 61, in that the fork means 58 is connected to an endless chain 62, which may be provided for one guide 60 or for both guides 60. The chain 62 is passed over sprockets 63, 64, which sprockets 64 can be driven by means of an electric motor 65.

The transfer conveyor 52 further comprises on either side of the fork means 59 a horizontal guide 66 and an endless pusher chain 67 with carriers 68 mounted thereon. Each guide 66 comprises two strip members 71 a, 71 b, which can pivot independently of each other by means of respective actuators 72a, 72b between a horizontal orientation as shown in full lines in figure 6 and a downwardly inclined orientation as shown in broken lines in figure 6. In the horizontal position, the spacing between the facing longitudinal edges of the strip members 71 a, 71 b on either side of the fork means 58 is smaller than the width of a product container 3, so that the strip members 71 a, 71 b can support the product container 3 in that position. In the downwardly inclined position, on the other hand, the spacing between the longitudinal edges in question is larger than the width of the product container 3, so that a product container 3 can pass between the opposite strip members 71a, 71b. By driving the pusher chain 67 in the direction indicated by the arrow 73, the product containers 3 can be pushed over the strip members 71a, 71 b in the horizontal position thereof by a carrier of 68.

The transfer conveyor 52 further comprises second fork means 74 provided with teeth 75. The teeth 75 are located between the rollers 57, seen in top plan view. The fork means 74 can be moved up and down as indicated by the double arrow 76 by means of opposite guides 77 and chains 78, to which the fork means 74 is connected in a manner compatible to that of the fork means 58 as already described in the foregoing.

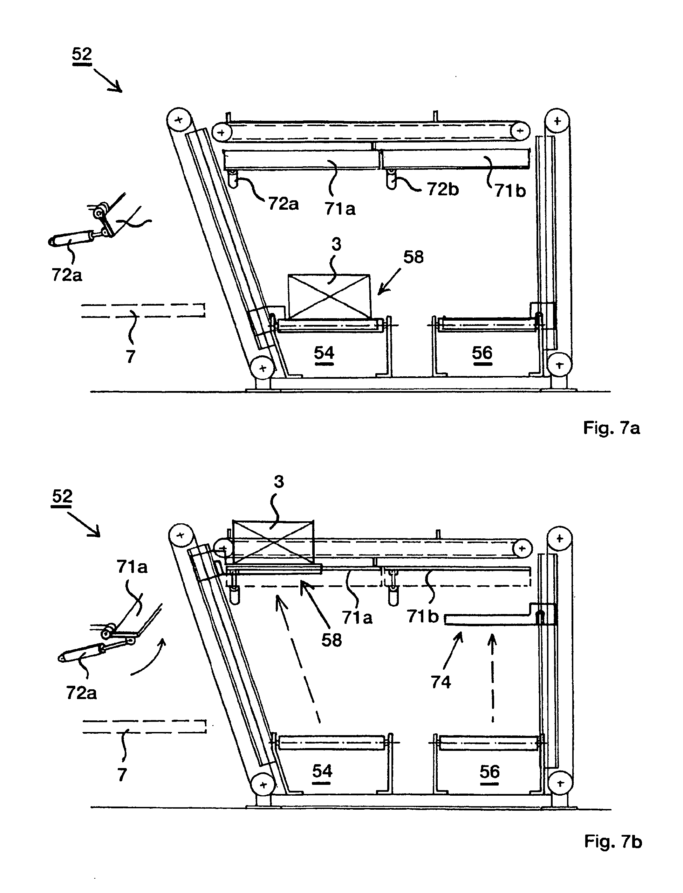

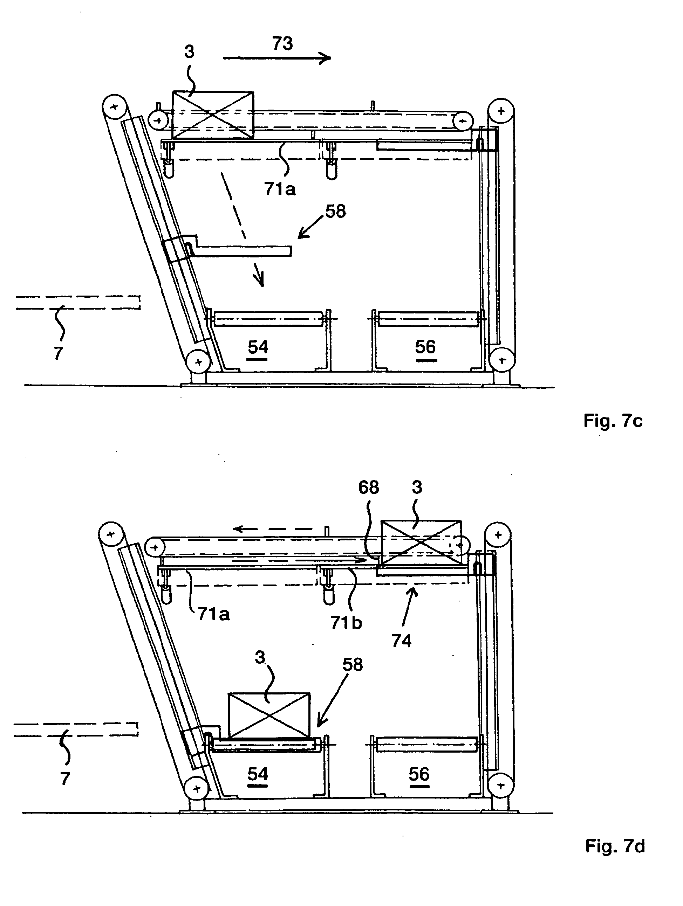

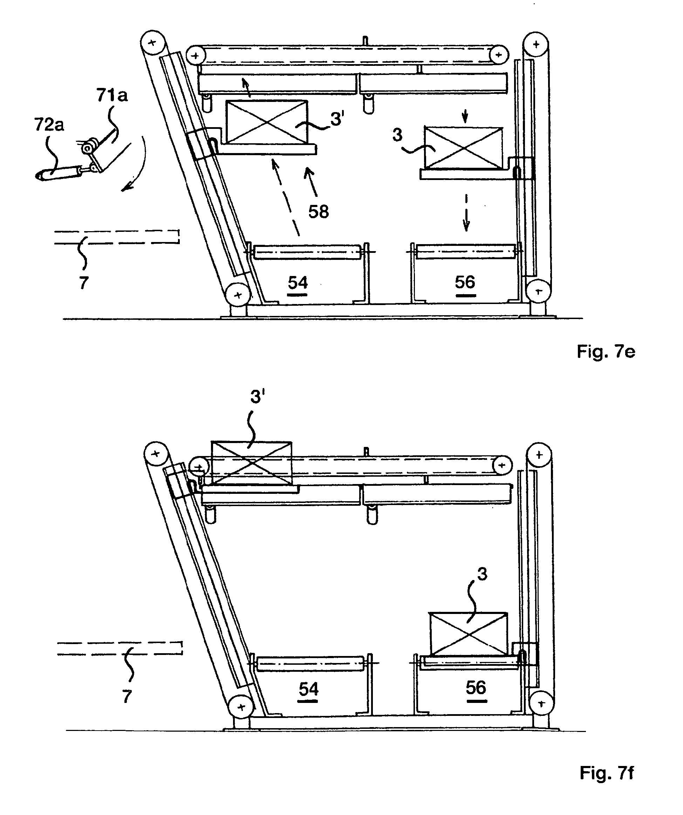

The operation of the transfer conveyor 52 will be explained in more detail below with reference to figures 7a-7f. The starting situation is the situation shown in figure 7a, in which the fork means 58 is in the lower position. In said lower position, the teeth 59 are located between the rollers 55, with the upper side of the teeth 59 being located below the level of the upper side of the rollers 55. On said rollers 55 a product container 3 is present, which has been supplied to the roller conveyor portion 54 by the supply conveyor 5. In figure 7b, the fork means 58 has been moved to the upper position. During the said upward movement, the product container 3 is taken over from the roller conveyor portion 54 by the fork means 58. At least during the last part of said upward movement, the opposite strip members 71 a are in the downwardly inclined position (see the detail on the left-hand side in figure 7a), so that the product container 3 can pass between the strip members 71a in question. After the fork means 58, or at least the product container 3, has passed the strip members 71a, the associated actuators 72a are driven, so that the strip members 71 a will take up the horizontal position (see the detail on the left-hand side in figure 7b). The fork means 58 then returns to the lower position (figure 7c), after which a next product container 3' can be supplied on the roller conveyor portion 54 again. During the downward movement of the fork means 58, the fork means 58 passes the opposite strip members 71 a, which will subsequently take over the product container 3 from the fork means 58. In that position the product container 3 is located at the pick position, from which the picker 2 can carry out the required activities. Once said activities for the respective product container 3 can be regarded as completed, the pusher chain 67 is driven in the direction indicated by the arrow 73, whereupon the carriers 68 push the product container 3 over the first strip members 71 a and subsequently the strip members 71 b, away from the picker 2, to a rear position (figure 7d). It is obvious that the opposite strip members 71 b must also be in the horizontal position in that case. Once the product container 3 is present on the strip members 71 b in its entirety, the strip members 71 a are tilted back to the downwardly inclined position again by means of associated actuators. In this way space is cleared for conveying the next product container 3' from the roller conveyor portion 54 to the pick position (figure 7e) by the fork means 58, as already described in the foregoing. After the product container 3 has reached the rear position on the strip members 71 b, whereupon the pusher chain 67 is stopped, of course, the fork means 74 will move to the upper position, during which movement the teeth 75 will pass the strip members 71 b and the fork means 74 will thus take over the product container 3 from the strip members 71 b. The strip members 71 b will then pivot to the downwardly inclined position, whereupon the fork means 74 will move to the lower position (figure 7e), in which the teeth 75 are positioned between the rollers 57 and the upper sides of the teeth 75 are positioned below the upper side of the rollers 57 (figure 7f). Subsequently the rollers 57 are driven for transferring the product container 3 to the discharge conveyor 6. It will be understood that once the product container 3 has reached the strip members 71 b in its entirety, the transfer conveyor 52 is ready to position a next product container 3' at the pick position, which provides a large degree of flexibility with relatively short exchange times for a next product container 3'.

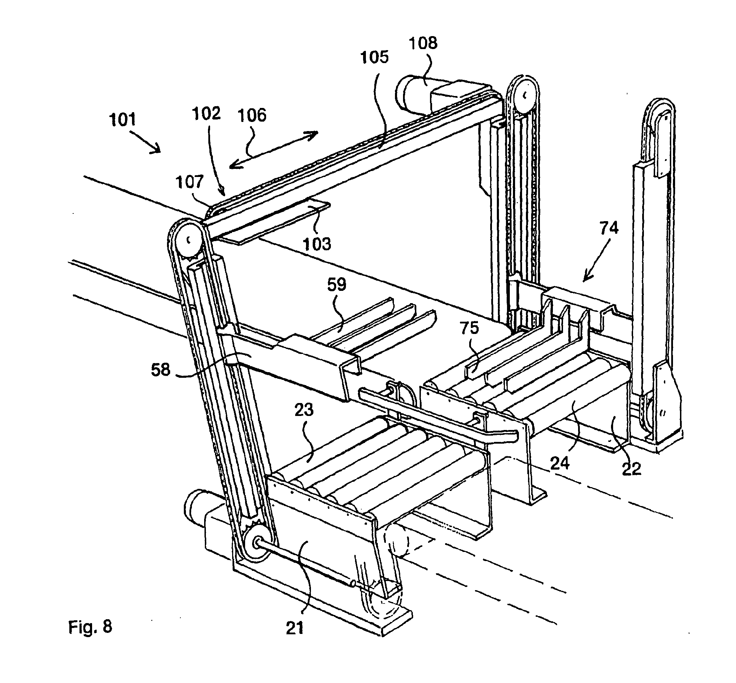

Figure 8 shows a transfer conveyor 101, which is different from the transfer conveyor 52 as regards the provisions for conveying product containers 3 in horizontal direction from the pick position. The other parts in figure 8 are indicated by the same numerals as used for the transfer conveyor 52 in figure 6. In contrast to that which is shown in figures 5 and 6, the teeth 59 of the fork means 58 of figure 8 form a support surface for the product container 3, which support surface is smaller than the bottom surface of the product container 3. In fact, each product container 3 is only picked up or supported in the centre thereof by the teeth 59 of the fork means 58 in figure 8, whilst the side edges of the product container 3 are unsupported.

The transfer conveyor 101 comprises support means 102 made up of parallel support strips 103, which, seen in top plan view, are located on either side of the teeth 59 of the fork means 58. The support means 102 can move forward and backward in the directions indicated by the double arrow 106 along a horizontal guide 105. The support means 102 is to that end connected to an endless drive chain 107, which can be driven by an electric motor 108.

The operation of the transfer conveyor 101 is in large measure compatible to that of the transfer conveyor 52. Once the fork means 58 supporting a product container 3 has reached the upper position, in which the support means 102 is positioned so that it is not located in the path of the respective product container 3, the support means 102 is moved to the front position, near the picker 2, by suitably controlling the electric motor 108. The parallel support strips 103 are positioned just below the side edges of the product container in that position, or, in other words, said support strips 103 support the part of the bottom of the product container that is not supported by the teeth 59 of the fork means 58.

The fork means 58 then returns to the lower position, during which downward movement the product container 3 is taken over from the fork means 58 by the support means 102. The product container 3 is then present at the pick position, from where the picker 2 collects products from the product container and 3 in collecting containers 4 present at place positions. While this is being done, a next product container 3 can be added to the roller conveyor portion 54 from the supply conveyor 5. Once the picker 2 has completed his activities concerning the product container 3 at the pick position, the support means 102 moves to the rear position. From said position, the fork means 74 is moved to the upper position. Analogously to the teeth 59 of the fork means 58, the teeth 75 of the fork means 74 form a support surface for the product container 3, which support surface is smaller than the bottom surface of the product container 3. Since the product container 3 is only supported at the side edges by the parallel support strips 103, the teeth 75 of the fork means 74 can take over the support of the product container 3 in the centre of the bottom thereof.

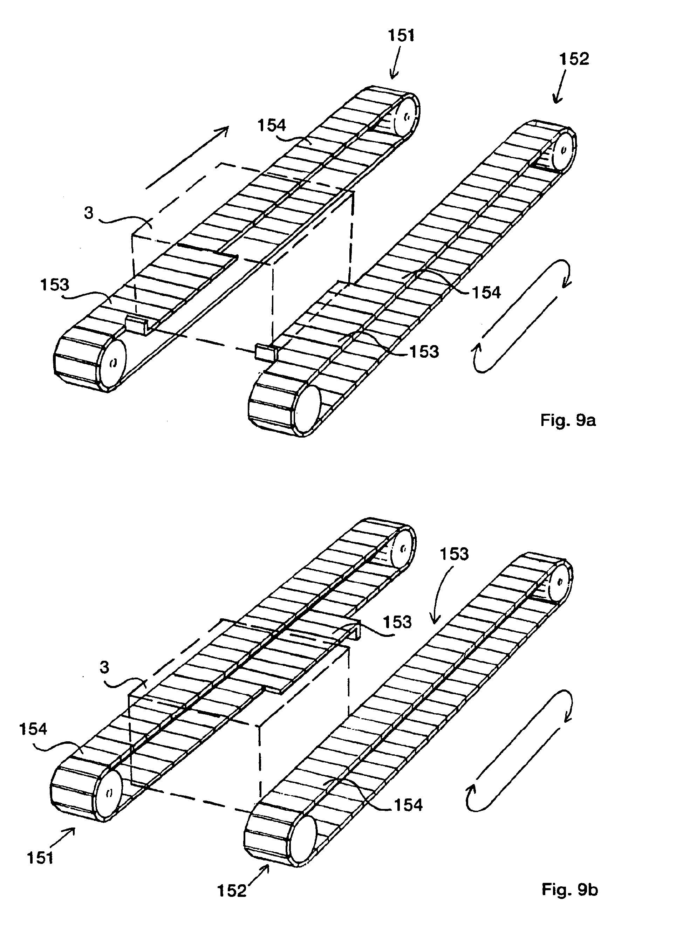

Figures 9a and 9b each show two support chains 151, 152, which can function as alternatives to the combination of the pusher chains 67 provided with carriers 68 and the guides 66. The support chains 151, 152 are made up of pivotally interconnected support strips 153, 154. The sides of the support strips 153, 154 are in line with each other at the longitudinal edges facing away from each other of the support chains 151, 152. The support strips 153 are longer than the support strips 154, however, as a result of which the spacing between the facing longitudinal edges of the support chains 151, 152 at the location of the support strips 153 is smaller than the width of a product container 3, so that the product container 3 can be supported by the support strips 153. The spacing between the facing longitudinal edges of the support chains 151, 152 at the location of the support strips 154 is larger than the width of a product container 3, so that a product container 3 can pass the support chains 151, 152 in vertical direction at the location of the support strips 154. This is illustrated for the product container 3 in figure 9b.

By suitably positioning the support chains 151, 152 it is possible on the one hand to transfer a product container 3 from the fork means 58 to the support chains 151, 152. After the product container 3 has subsequently been moved from the pick position to the rear position, with the product container 3 being supported by the support strips 153 in the upper part of the support chains 151, 152, the fork means 74 can subsequently take over the product container 3 again from the support chains 151, 152.

## Claims

1. A station (51) for collecting products from product containers (3), comprising an at least substantially horizontal row of place positions arranged side by side, each for accommodating a collecting container (4), a pick position in said row of place positions for accommodating a product container (3), a conveying system comprising a first conveyor (52; 101) for conveying product containners (3) along a conveying path, of which conveying path the pick position forms part, said conveying path comprising a first conveying path portion (62) ending at the pick position and a second conveying path portion (67, 107; 151,152) starting at the pick position, and control means for controlling the station (51), **characterized in that** conveying system comprises separate drive means (65; 108) for driving the conveying system at the first conveying path portion (62) and at the second conveying path portion (67, 107; 151,152) and **in that** the conveying system comprises a number of second conveyors (53), each for conveying a collecting container (4) to be filled with at least one product from a product container (3) present at the pick position towards a place position and for conveying a collecting container (4) filled with at least one product from a product container (3) present at the pick position in a direction away from the place position.

2. A station (51) according to claim 1, **characterised in that** a further conveying path portion (78) connects to the second conveying path portion (67, 107; 151, 152) at the end of said second conveying path portion (67, 107; 151,152) remote from the pick position, which further conveying path portion (78) is oriented downwards, whilst the conveying system comprises separate drive means for driving the conveying system at the location of said second conveying path portion (67, 107; 151,152) and said further conveying path portion (78).

3. A station (51) according to claim 1 or 2, **characterised in that** the place positions associated with the station (51) are provided in only one layer.

4. A station (51) according to any one of the preceding claims, **characterised in that** the conveying path of the first conveyor (52; 101) comprises at least one horizontal conveying path portion (54, 56; 23, 24) extending at least substantially parallel to the row of place positions, below the level of said row.

5. A station (51) according to claim 4, **characterised in that** both upstream of the pick position and downstream of the pick position below the level of said row of place positions a horizontal conveying path portion (54, 56; 23, 24) extending at least substantially parallel to said row is provided.

6. A station (51) according to claim 5, **characterised in that** said horizontal conveying path portions (54, 56; 23, 24) extend in parallel directions.

7. A station (51) according to any one of the preceding claims, **characterised in that** only one pick position is provided in said row of place positions.

8. A station (51) according to any one of the preceding claims, **characterised in that** the first conveying path portion (62) extends upwards or downwards, with the first conveying path portion (62) extending at an angle to the vertical.

9. A station (51) according to claim 8, **characterised in that** said angle is maximally 30 degrees.

10. A station (51) according to any one of the preceding claims, **characterised in that** the conveying path of the first conveyor (52; 101) extends at least partially under at least part of the second conveyors (53).

11. A station (51) according to any one of the preceding claims, **characterised in that** the conveying system comprises a third conveyor (11) connecting to the second conveyors (53) at the end remote from the place position associated with the second conveyor (53) in question for transferring collecting containers (4) between second conveyors (53) and said third conveyor (11).

12. A station (51) according to claim 11, **characterised in that** said third conveyor extends (11) at least partially parallel to said row of place positions.

13. A station (51) according to any one of the preceding claims, **characterised in that** sensor means (16) are provided at each place position for detecting movement in a collecting container (4) at the location of the place position in question.

14. A station (51) according to claim 13, **characterised in that** the control means are designed to receive information about the number of products that is to be collected from a product container (3) present at the pick position in one or a number of collecting containers (4) present at one or a number of place positions for the purpose of counting the number of movements in the collecting container(s) (4) in question on the basis of signals from the sensor means (16) after the product contained (3) in question has reached the pick position and controlling the first conveyor (52; 101) to convey a next product container (3) to the pick position as soon as the number of movements counted corresponds to the number of products to be collected from a product container (3) present at the pick position in one or a number of collecting containers (4) present at one or a number of place positions.

## Patentansprüche

1. Station (51) zum Sammeln von Produkten aus Produktbehältern (3), mit einer wenigstens im Wesentlichen horizontalen Reihe von nebeneinander angeordneten Ablegepositionen, jeweils zur Aufnahme eines Sammelbehälters (4), einer Kommissionierungsposition in der Reihe von Ablegepositionen zur Aufnahme eines Produktbehälters (3), einem Fördersystem mit einem ersten Förderer (52; 101) zum Fördern von Produktbehältern (3) entlang einer Förderbahn, wobei die Kommissionierungsposition einen Teil der Förderbahn bildet, wobei die Förderbahn einen ersten Förderbahnabschnitt (62), der an der Kommissionierungsposition endet, und einen zweiten Förderbahnabschnitt (67; 107; 151, 152) umfasst, der an der Kommissionierungsposition beginnt, sowie Steuereinrichtungen zur Steuerung der Station (51), **dadurch gekennzeichnet, dass** das Fördersystem getrennte Antriebseinrichtungen (65; 108) zum Antreiben des Fördersystems am ersten Förderbahnabschnitt (62) und am zweiten Förderbahnabschnitt (67; 107; 151, 152) umfasst, und dass das Fördersystem mehrere zweite Förderer (53) jeweils zum Fördern eines Sammelbehälters (4), der mit wenigstens einem Produkt aus einem Produktbehälter (3) zu füllen ist, der sich an der Kommissionierungsposition befindet, in Richtung auf eine Ablegeposition, und zum Fördern eines Sammelbehälters (4) umfasst, der mit wenigstens einem Produkt aus einem Produktbehälter (3) gefüllt ist, der sich an der Kommissionierungsposition befindet, in einer Richtung weg von der Ablegeposition.

2. Station (51) nach Anspruch 1, **dadurch gekennzeichnet, dass** am von der Kommissionierungsposition entfernten Ende des zweiten Förderbahnabschnitts (67; 107; 151, 152) ein weiterer Förderbahnabschnitt (78) an den zweiten Förderbahnabschnitt (67; 107; 151, 152) angeschlossen ist, wobei der weitere Förderbahnabschnitt (78) nach unten ausgerichtet ist, während das Fördersystem getrennte Antriebseinrichtungen zum Antreiben des Fördersystems am Ort des zweiten Förderbahnabschnitts (67; 107; 151, 152) und des weiteren Förderbahnabschnitts (78) umfasst.

3. Station (51) nach Anspruch 1 oder 2, **dadurch gekennzeichnet, dass** die der Station (51) zugeordneten Ablegepositionen in nur einer Lage vorgesehen sind.

4. Station (51) nach einem der vorhergehenden Ansprüche, **dadurch gekennzeichnet, dass** die Förderbahn des ersten Förderers (52; 101) wenigstens einen horizontalen Förderbahnabschnitt (54, 56; 23, 24) aufweist, der sich wenigstens im Wesentlichen parallel zu der Reihe von Ablegepositionen unterhalb der Höhe der Reihe erstreckt.

5. Station (51) nach Anspruch 4, **dadurch gekennzeichnet, dass** sowohl stromaufwärts der Kommissionierungsposition als auch stromabwärts der Kommissionierungsposition unterhalb der Höhe der Reihe von Ablegepositionen ein horizontaler Förderbahnabschnitt (54, 56; 23, 24) vorgesehen ist, der sich wenigstens im Wesentlichen parallel zu der Reihe erstreckt.

6. Station (51) nach Anspruch 5, **dadurch gekennzeichnet, dass** sich die horizontalen Förderbahnabschnitte (54, 56; 23, 24) in parallele Richtungen erstrecken.

7. Station (51) nach einem der vorhergehenden Ansprüche, **dadurch gekennzeichnet, dass** nur eine Kommissionierungsposition in der Reihe von Ablegepositionen vorgesehen ist.

8. Station (51) nach einem der vorhergehenden Ansprüche, **dadurch gekennzeichnet, dass** sich der erste Förderbahnabschnitt (62) nach oben oder nach unten erstreckt, wobei sich der erste Förderbahnabschnitt (62) in einem Winkel zur Senkrechten erstreckt.

9. Station (51) nach Anspruch 8, **dadurch gekennzeichnet, dass** der Winkel maximal 30 Grad beträgt.

10. Station (51) nach einem der vorhergehenden Ansprüche, **dadurch gekennzeichnet, dass** sich die Förderbahn des ersten Förderers (52; 101) wenigstens teilweise unter wenigstens einen Teil des zweiten Förderers (53) erstreckt.

11. Station (51) nach einem der vorhergehenden Ansprüche, **dadurch gekennzeichnet, dass** das Fördersystem einen dritten Förderer (11) aufweist, der an dem von der dem betreffenden zweiten Förderer (53) zugeordneten Ablegeposition entfernten Ende an die zweiten Förderer (53) angeschlossen ist, um Sammelbehälter (4) zwischen zweiten Förderern (53) und dem dritten Förderer (11) zu transportieren.

12. Station (51) nach Anspruch 11, **dadurch gekennzeichnet, dass** sich der dritte Förderer (11) wenigstens teilweise parallel zu der Reihe von Ablegepositionen erstreckt.

13. Station (51) nach einem der vorhergehenden Ansprüche, **dadurch gekennzeichnet, dass** an jeder Ablegeposition Sensoreinrichtungen (16) dazu vorgesehen sind, eine Bewegung in einem Sammelbehälter (4) am Ort der betreffenden Ablegeposition zu erfassen.

14. Station (51) nach Anspruch 13, **dadurch gekennzeichnet, dass** die Steuereinrichtungen so ausgelegt sind, dass sie Informationen über die Anzahl von Produkten empfangen, die aus einem Produktbehälter (3) entnommen werden soll, der sich an der Kommissionierungsposition befindet, und in einem oder mehreren Sammelbehältern (4) gesammelt werden soll, die sich an einer oder mehreren Ablegepositionen befinden, zum Zweck des Zählens der Anzahl von Bewegungen in dem bzw. den betreffenden Sammelbehälter(n) (4) anhand von Signalen von den Sensoreinrichtungen (16), nachdem der betreffende Produktbehälter (3) die Kommissionierungsposition erreicht hat, und um den ersten Förderer (52; 101) so anzusteuern, dass er einen nächsten Produktbehälter (3) zu der Kommissionierungsposition fördert, sobald die Anzahl der gezählten Bewegungen der Anzahl von Produkten entspricht, die aus einem Produktbehälter (3) entnommen werden sollen, der sich an der Kommissionierungsposition befindet, und in einem oder mehreren Sammelbehältern (4) gesammelt werden sollen, die sich an einer oder mehreren Ablegepositionen befinden.

## Revendications

1. Station (51) de collecte de produits provenant de contenants de produits (3), comprenant au moins une rangée sensiblement horizontale de positions de placement agencées côte à côte, chacune destinée à accueillir un contenant de collecte (4), une position de ramassage dans ladite rangée de positions de placement destinée à accueillir un contenant de produits (3), un système de convoyage comprenant un premier convoyeur (52 ; 101) permettant de convoyer des contenants de produits (3) le long d'un chemin de convoyage, chemin de convoyage dont fait partie la position de ramassage, ledit chemin de convoyage comprenant une première portion de chemin de convoyage (62) se terminant à la position de ramassage et une seconde portion de chemin de convoyage (67 ; 107 ; 151, 152) démarrant à la position de ramassage, et un moyen de commande destiné à commander la station (51), **caractérisée en ce que** le système de convoyage comprend des moyens d'entraînement séparés (65 ; 108) permettant d'entraîner le système de convoyage au niveau de la première portion de chemin de convoyage (62), et au niveau de la seconde portion de chemin de convoyage (67 ; 107 ; 151, 152) et **en ce que** le système de convoyage comprend un certain nombre de deuxièmes convoyeurs (53), chacun étant destiné à convoyer un contenant de collecte (4) à remplir avec au moins un produit provenant d'un contenant de produits (3) présent à la position de ramassage vers une position de placement et destiné à convoyer un contenant de collecte (4) rempli d'au moins un produit provenant d'un contenant de produits (3) présent à la position de ramassage dans une direction en éloignement de la position de placement.

2. Station (51) selon la revendication 1, **caractérisée en ce qu'**une portion de chemin de convoyage supplémentaire (78) se relie à la seconde portion de chemin de convoyage (67 ; 107 ; 151, 152) à l'extrémité de ladite seconde portion de chemin de convoyage (67 ; 107 ; 151, 152) éloignée de la position de ramassage, laquelle portion de chemin de convoyage supplémentaire (78) est orientée vers le bas, alors que le système de convoyage comprend des moyens d'entraînement séparés permettant d'entraîner le système de convoyage à l'emplacement de ladite seconde portion de chemin de convoyage (67 ; 107 ; 151, 152) et ladite portion de chemin de convoyage supplémentaire (78).

3. Station (51) selon la revendication 1 ou 2, **caractérisée en ce que** les positions de placement associées à la station (51) sont disposées en une seule couche.

4. Station (51) selon l'une quelconque des revendications précédentes, **caractérisée en ce que** le chemin de convoyage du premier convoyeur (52 ; 101) comprend au moins une portion de chemin de convoyage horizontale (53, 56 ; 23, 24) s'étendant au moins sensiblement parallèlement à la rangée de positions de placement, en dessous du niveau de ladite rangée.

5. Station (51) selon la revendication 4, **caractérisée en ce qu'**à la fois en amont de la position de ramassage et en aval de la position de ramassage en dessous du niveau de ladite rangée de positions de placement, il est prévu une portion de chemin de convoyage horizontale (54, 56 ; 23, 24) s'étendant au moins sensiblement parallèlement à ladite rangée.

6. Station (51) selon la revendication 5, **caractérisée en ce que** lesdites portions de chemin de convoyage horizontales (54, 56 ; 23, 24) s'étendent dans des directions parallèles.

7. Station (51) selon l'une quelconque des revendications précédentes, **caractérisée en ce qu'**une seule position de ramassage est prévue dans ladite rangée de positions de placement.

8. Station (51) selon l'une quelconque des revendications précédentes, **caractérisée en ce que** la première portion de chemin de convoyage (62) s'étend vers le haut ou vers le bas, la première portion de chemin de convoyage (62) formant un angle par rapport à la verticale.

9. Station (51) selon la revendication 8, **caractérisée en ce que** ledit angle est au maximum de 30 degrés.

10. Station (51) selon l'une quelconque des revendications précédentes, **caractérisée en ce que** le chemin de convoyage du premier convoyeur (52 ; 101) s'étend au moins partiellement en dessous d'au moins une partie des deuxièmes convoyeurs (53).

11. Station (51) selon l'une quelconque des revendications précédentes, **caractérisée en ce que** système de convoyage comprend un troisième convoyeur (11) se reliant aux deuxièmes convoyeurs (53) à l'extrémité éloignée de la position de placement associée au deuxième convoyeur (53) en question pour transférer des contenants de collecte (4) entre des deuxièmes convoyeurs (53) et ledit troisième convoyeur (11).

12. Station (51) selon la revendication 11, **caractérisée en ce que** ledit troisième convoyeur (11) s'étend au moins partiellement parallèlement à ladite rangée de positions de placement.

13. Station (51) selon l'une quelconque des revendications précédentes, **caractérisée en ce que** des moyens de capteur (16) sont prévus à chaque position de placement pour détecter un mouvement dans un contenant de collecte (4) à l'emplacement de la position de placement en question.

14. Station (51) selon la revendication 13, **caractérisée en ce que** les moyens de commande sont conçus pour recevoir des informations à propos du nombre de produits qui doit être collecté à partir d'un contenant de produits (3) présent à la position de ramassage dans un contenant de collecte (4) ou un certain nombre de contenants de collecte (4) présents en une ou un certain nombre de positions de placement dans le but de compter le nombre de mouvements dans le(s) contenant(s) de collecte (4) en question sur la base de signaux provenant des moyens de capteur (16) après que le contenant de produits (3) en question a atteint la position de ramassage et de commander le premier convoyeur (52 ; 101) afin qu'il convoie un contenant de produits (3) suivant vers la position de ramassage dès que le nombre de mouvements comptés correspond au nombre de produits à collecter à partir d'un contenant de produits (3) présent à la position de ramassage dans un contenant de collecte (4) ou un certain nombre de contenants de collecte (4) présents en une ou plusieurs positions de placement.
